(19) Europäisches Patentamt
European Patent Office
Office européen des brevets

(11) **EP 4 556 314 A1**

(12) **EUROPEAN PATENT APPLICATION**

(43) Date of publication:
**21.05.2025 Bulletin 2025/21**

(51) International Patent Classification (IPC):
***B60Q 1/40*** *(2006.01)*

(21) Application number: **23210168.3**

(52) Cooperative Patent Classification (CPC):
**B60Q 1/40**

(22) Date of filing: **15.11.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Volvo Truck Corporation**
**405 08 Göteborg (SE)**

(72) Inventors:
• **BARRELLON, Remi**
  **69360 Simandres (FR)**
• **GONZALEZ MOSQUERA, Oriana**
  **69100 Villeurbanne (FR)**
• **DE BRITO, David**
  **38230 Charvieu-Chavagneux (FR)**

(74) Representative: **Ström & Gulliksson AB**
**P.O. Box 4188**
**203 13 Malmö (SE)**

(54) **A COMPUTER SYSTEM AND METHOD FOR TURN INDICATOR CANCELLATION**

(57) A computer system is provided, comprising processing circuitry configured to: determine that a turn indicator **(10)** of a host vehicle **(1)** is activated; obtain a cross-over distance **(COD)** between the host vehicle **(1)** and a cross-over lane line **(20a)** during a lane change from an original lane **(5, 7)** over the cross-over lane line to a target lane **(5, 7)**; determine that the cross-over distance **(COD)** is at least as great as a predetermined distance **(PD)**; and cancel the turn indicator **(10)**.

FIG. 2

**Description**

**TECHNICAL FIELD**

The disclosure relates generally to vehicles. In particular aspects, the disclosure relates to a computer system and a method for turn indicator cancellation. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

Vehicles are normally equipped with turn indicators, and modern vehicles are often configured to implement automatic cancellation of the turn indicator when the turn is completed and the steering wheel angle returns to its normal position.

It is important to use the turn indicator not only to indicate a turn, but also to indicate a lane change. Especially during highway driving, the motion of the steering wheel angle during a change of lane is too small to be used for automatic turn indicator cancellation. In view of this, there is a need for improvements.

**SUMMARY**

According to a first aspect of the disclosure, a computer system is provided. The computer system comprises processing circuitry configured to determine that a turn indicator of a host vehicle is activated, obtain a cross-over distance between the host vehicle and a cross-over lane line during a lane change from an original lane over the cross-over lane line to a target line, determine that the cross-over distance is at least as great as a predetermined distance, and cancel the turn indicator. The first aspect of the disclosure may seek to enable automatic turn indicator cancellation during lane change and in situations where the turn indicator is activated, but when the steering wheel angle is insufficient to be used as a cancellation parameter. A technical benefit may include improving traffic safety and assistance during driving.

Optionally in some examples, including in at least one preferred example, the cross-over distance between the host vehicle and the cross-over lane line is a lateral distance extending in a direction being perpendicular to the longitudinal direction of the cross-over lane line. A technical benefit may include a more robust cancellation of the turn indicator also in situations when lane change occurs in a curve, which otherwise could affect the obtained value of the cross-over distance.

Optionally in some examples, including in at least one preferred example, the cross-over distance between the host vehicle and the cross-over lane line is a distance between a center of the host vehicle and the cross-over lane line. A technical benefit may include a consistent obtaining of the cross-over distance for lane changes to the left as well as to the right.

Optionally in some examples, including in at least one preferred example, the processing circuitry is configured to obtain the cross-over distance between the host vehicle and the cross-over lane line by measuring the cross-over distance between the host vehicle and the cross-over lane line. A technical benefit may include a simple obtaining of the cross-over distance.

Optionally in some examples, including in at least one preferred example, the processing circuitry is configured to obtain the cross-over distance between the host vehicle and the cross-over lane line by measuring a margin distance between the host vehicle and a distant lane line of the target lane. A technical benefit may include a more versatile obtaining of the cross-over distance, especially beneficial in situations when the cross-over lane is non-detectable.

Optionally in some examples, including in at least one preferred example, the processing circuitry is further configured to measure the margin distance between the host vehicle and a distant lane line of the target lane as a response to a failed attempt to measure the cross-over distance between the host vehicle and the cross-over lane line. A technical benefit may include a more robust and still efficient obtaining of the cross-over distance that is capable of handling also situations when the cross-over lane is non-detectable.

Optionally in some examples, including in at least one preferred example, the cross-over distance is obtained by subtracting the measured margin distance from a target lane width. A technical benefit may include a simple determining of an occurred lane change even when it is not possible to determine the true cross-over distance.

Optionally in some examples, including in at least one preferred example, the predetermined distance is a fixed value. A technical benefit may include a very simple and fast process for determining a lane change.

Optionally in some examples, including in at least one preferred example, the predetermined distance is based on a width of at least one of the original lane and the target lane. A technical benefit may include improved timing of the turn indicator cancellation.

Optionally in some examples, including in at least one preferred example, the processing circuitry is further configured to obtain a change in distance between the host vehicle and a lane line during a lane change from an original lane over the cross-over lane to a target lane; determine that the change in distance is at least as great as a predetermined change in distance; and cancel the turn indicator based on the change in distance being at least as great as the predetermined change in distance. A technical benefit may include improving robustness of the turn indicator cancellation in situations where it is not possible to accurately determine the cross-over distance.

Optionally in some examples, including in at least one preferred example, the change in distance represents a change of lane line from a left lane line of the original lane to a left lane line of the target lane, or from a right lane line of the original lane to a right lane line of the target lane. A technical benefit may include a versatile approach for lane changes to the left as well as for lane changes to the right.

Optionally in some examples, including in at least one preferred example, the processing circuitry is further configured to determine that a distance between the vehicle and the left or right lane line is within a tolerance interval based on the obtained change in distance. A technical benefit may include verifying that the lane change has occurred before cancelling the turn indicator.

Optionally in some examples, including in at least one preferred example, the cross-over distance between the host vehicle and the cross-over lane line is a lateral distance extending in a direction being perpendicular to the longitudinal direction of the cross-over lane line, and wherein the cross-over distance between the host vehicle and the cross-over lane line is a distance between a center of the host vehicle and the cross-over lane line. The processing circuitry is further configured to: obtain the cross-over distance between the host vehicle and the cross-over lane line by measuring the cross-over distance between the host vehicle and the cross-over lane line and/or obtain the cross-over distance between the host vehicle and the cross-over lane line by measuring a margin distance between the host vehicle and a distant lane line of the target lane; and to measure the margin distance between the host vehicle and a distant lane line of the target lane as a response to a failed attempt to measure the cross-over distance between the host vehicle and the cross-over lane line, wherein the cross-over distance is obtained by subtracting the measured margin distance from a target lane width. The predetermined distance is a fixed value or the predetermined value is based on a width of at least one of the original lane and the target lane. The processing circuitry is further configured to: obtain a change in distance between the host vehicle and a lane line during a lane change from an original lane over the cross-over lane to a target lane; and determine that the change in distance is at least as great as a predetermined change in distance, and cancel the turn indicator based on the change in distance being at least as great as the predetermined change in distance, wherein the change in distance represents a change of lane line from a left lane line of the original lane to a left lane line of the target lane, or from a right lane line of the original lane to a right lane line of the target lane. The processing circuitry is further configured to: determine that a distance between the vehicle and the left or right lane line is within a tolerance interval based on the obtained change in distance, and the processing circuitry is further configured to: re-determine, for a subsequent position of the host vehicle during the lane change, that the distance between the vehicle and the left or right lane line is within the tolerance interval. A technical benefit may include a further verification of the occurred lane change.

According to a second aspect of the disclosure, a vehicle is provided. The vehicle comprises the computer system of the first aspect.

According to a third aspect of the disclosure, a computer-implemented method is provided. The computer-implemented method comprises: determining, by processing circuitry of a computer system, that a turn indicator of a host vehicle is activated; obtaining, by the processing circuitry, a cross-over distance between the host vehicle and a cross-over lane line during a lane change from an original lane over the cross-over lane line to a target lane; determining, by the processing circuitry, that the cross-over distance is at least as great as a predetermined distance, and cancelling, by the processing circuitry, the turn indicator. The third aspect of the disclosure may seek to enable automatic turn indicator cancellation during lane change and in situations where the turn indicator is activated, but when the steering wheel angle is insufficient to be used as a cancellation parameter. A technical benefit may include improving traffic safety and assistance during driving.

Optionally in some examples, including in at least one preferred example, the method further comprises: obtaining, by the processing circuitry, the cross-over distance between the host vehicle and the cross-over lane line by measuring the cross-over distance between the host vehicle and the cross-over lane line, or by measuring a margin distance between the host vehicle and a distant lane line of the target lane. A technical benefit may include a very simple obtaining of the cross-over distance, as well as a more versatile obtaining of the cross-over distance, especially beneficial in situations when the cross-over lane is non-detectable.

Optionally in some examples, including in at least one preferred example, the method further comprises: measuring the margin distance between the host vehicle and a distant lane line of the target lane as a response to a failed attempt to measure the cross-over distance between the host vehicle and the cross-over lane line. A technical benefit may include a more robust and still efficient obtaining of the cross-over distance that is capable of handling also situations when the cross-over lane is non-detectable.

Optionally in some examples, including in at least one preferred example, the cross-over distance is obtained by subtracting the measured margin distance from a target lane width. A technical benefit may include a simple determining of an occurred lane change even when it is not possible to determine the true cross-over distance.

According to a fourth aspect of the disclosure, a computer program product is provided. The computer program product comprises program code for performing, when executed by the processing circuitry, the method of the third aspect.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect.

According to a further aspect of the disclosure, a computer system is provided. The computer system comprises processing circuitry configured to obtain a change in distance between the host vehicle and a lane line during a lane change from an original lane over the cross-over lane to a target lane; determine that the change in distance is at least as great as a predetermined change in distance; and cancel the turn indicator based on the change in distance being at least as great as the predetermined change in distance. A technical benefit may include improving robustness of the turn indicator cancellation in situations where it is not possible to accurately determine the cross-over distance.

Optionally in some examples, including in at least one preferred example, the processing circuitry is further configured to determine that a distance between the vehicle and a left or right lane line is above a predetermined threshold before the change in distance is obtained.

Optionally in some examples, including in at least one preferred example, the processing circuitry is further configured to verify the lane change before the turn indicator is cancelled.

According to a further aspect of the disclosure, a method is provided. The method comprises obtaining a change in distance between the host vehicle and a lane line during a lane change from an original lane over the cross-over lane to a target lane; determining that the change in distance is at least as great as a predetermined change in distance; and cancelling the turn indicator based on the change in distance being at least as great as the predetermined change in distance.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

FIG. 1 is an exemplary view of a vehicle according to an example.

FIG. 2 is an exemplary view of a vehicle during a lane change according to an example.

FIG. 3 is an exemplary diagram of a turn indicator cancellation system according to different examples.

FIG. 4A is a schematic diagram of the positions of a vehicle during a lane change from, with reference to the driving direction, a left lane to a right lane according to an example.

FIG. 4B is a schematic diagram of the positions of a vehicle during a lane change from a right lane to a left lane according to an example.

FIG. 4C is a schematic diagram of the positions of a vehicle during a lane change from a right lane to a left lane according to an example.

FIG. 4D is a schematic diagram of the positions of a vehicle during a lane change from a right lane to a left lane according to an example.

FIG. 5 is a flow chart of an exemplary method to cancel the turn indicator of a vehicle after a lane change according to an example.

FIG. 6 is a flow chart of an exemplary method to cancel the turn indicator of a vehicle after a lane change according to an example.

FIG. 7 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The examples presented herein provide a solution to improve automatic cancellation of a turn indicator of a vehicle, in particular a heavy duty vehicle such as a truck, a bus, etc. While existing turn indicator cancellation solutions typically rely on the steering wheel angle, the herein described examples allow for automatic turn indicator cancellation even in situations where the change in steering wheel angle is insignificant, i.e. during lane changes. By identifying a cross-over distance, i.e. the distance between the vehicle and the cross-over lane line, to be at least as great as a predetermined distance, it is possible to accurately determine that a lane change has occurred and that the turn indicator should be turned off.

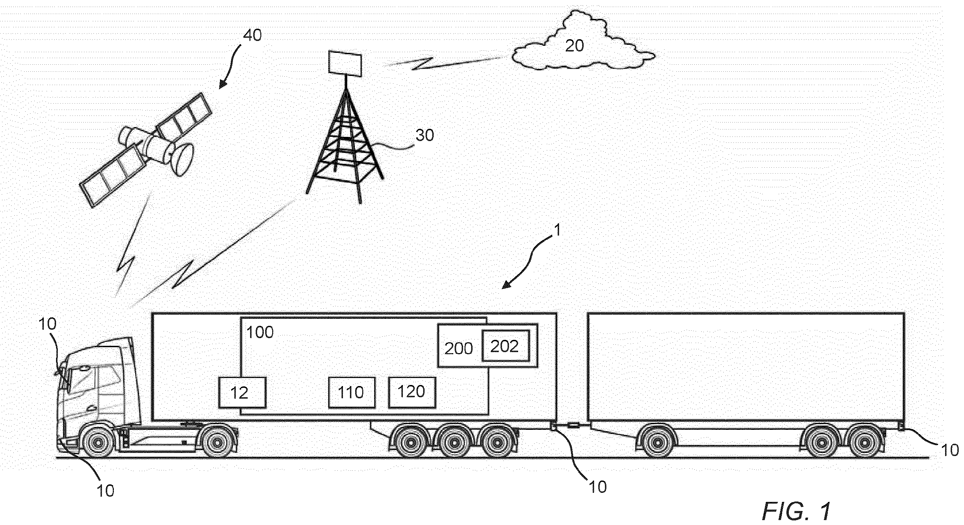

FIG. 1 is an exemplary view of a vehicle **1** according to one example. The vehicle **1** comprises one or more turn indicators **10,** and the vehicle **1** is programmed to cancel the one or more turn indicators **10** automatically after a lane change, as will be described further in the following. The one or more turn indicators **10** are preferably provided as one or more blinkers, or light emitting devices, arranged at front, rear, and possible intermediate positions on both left and right sides of the vehicle **1** and configured to provide a blinking signal for the surrounding traffic. Preferably, as is well known in the art, the turn indicators **10** are synchronized in terms of initiation and cancellation.

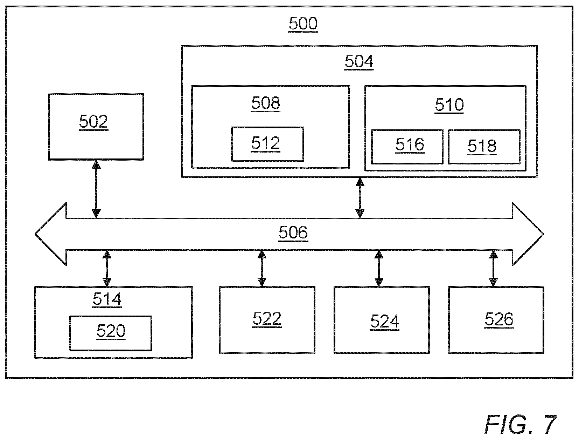

The vehicle **1** comprises, at least to some extent, processing circuitry **110** forming part of a computer system **100** (see **FIG. 7).** The processing circuitry **110** is configured to implement a turn indicator cancellation system **200.**

The vehicle **1** may further comprise communications circuitry **12** configured to receive and/or send communications. The communications circuitry **12** may be configured to enable the vehicle **1** to communicate with one or more external devices or systems such as a cloud server **20.** The communication with the external devices or systems may be directly or via a communications interface such as a cellular communications interface **30,** such as a radio base station. The cloud server **20** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **12** may, additionally or alternatively, be configured to enable the vehicle **1** to be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **1** may for example be configured to utilize data obtain from the GNSS **40** to determine a geographical location of the vehicle **1.**

The vehicle **1** in **FIG. 1** comprises the computer system **100** and the turn indicator cancellation system **200.** The computer system **100** may be operatively connected to the turn indicator cancellation system **200** and optionally to the communications circuitry **12** of the host vehicle **1.** The computer system **100** comprises processing circuitry **110.** The computer system **100** may comprise a storage device **120,** advantageously a non-volatile storage device such as a hard disk drives (HDDs), solid-state drives (SSDs) etc. In some examples, the storage device **120** is operatively connected to the computer system **100.** The turn indicator cancellation system **200** may comprise turn indicator cancellation system processing circuitry **202;** the turn indicator cancellation system processing circuitry **202** may be part of the processing circuitry **110** of the computer system **100.**

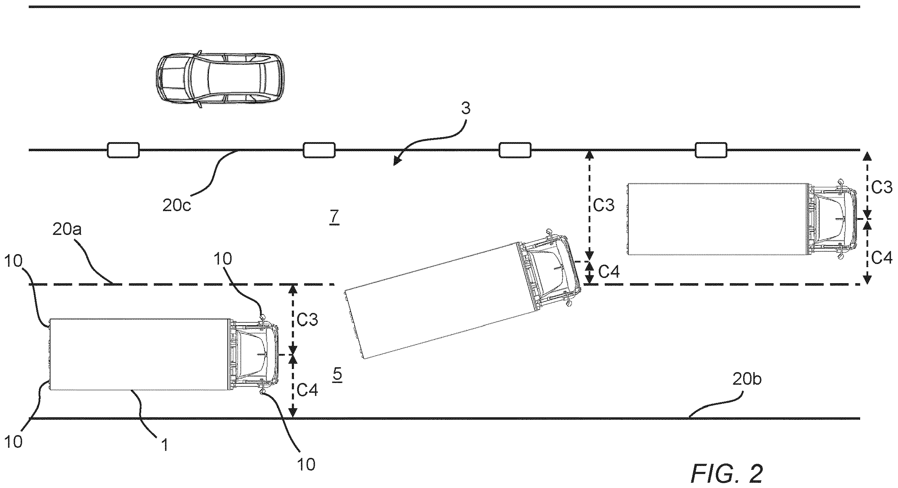

In **FIG. 2** operation of the vehicle **1** is shown schematically, as the vehicle **1** traverses a road segment **3** having an inner lane **5** and an outer lane **7.** The lanes are indicated by lane lines **20a-c.** The lane lines **20** may be solid or dashed. Starting at the left side of the drawing, the vehicle **1** initiates a lane change from the original inner lane **5** by turning on the turn indicators **10.** Such activation of the turn indicators **10** may be performed by a driver maneuvering a stalk, by pushing a button, or similar.

The turn indicators **10** are turned on as the vehicle **1** crosses the cross-over lane line **20a,** i.e. the lane line separating the inner lane **5** from the outer lane **7,** as indicated by the central portion of the drawing.

When the vehicle **1** has successfully performed the lane change, as indicated by the right portion of the drawing, the turn indicators **10** are automatically cancelled, i.e. turned off. This cancellation of the turn indicators **10** is effected by the turn indicator cancellation system **200** of the vehicle **1.**

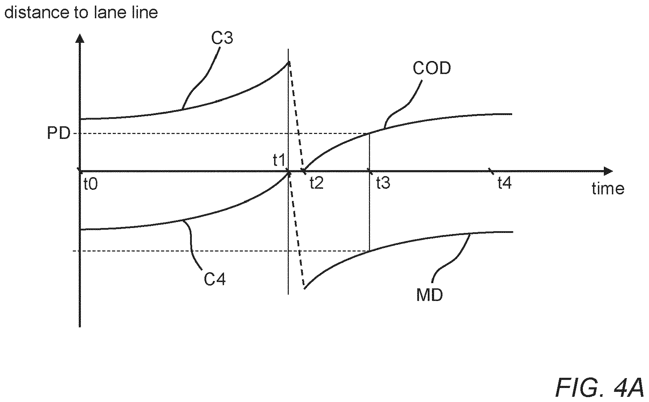

The turn indicator cancellation system **200** operates based on obtained distances between the vehicle **1** and the immediate left and right lane lines **20a-c.** These obtained distances, which will be explained further in particular with reference to **FIGS. 4A-D,** are in **FIG. 2** indicated by reference numerals **C3, C4.** The distance **C3** represents the lateral distance between the vehicle **1** and the immediate left lane line. As is shown in **FIG. 2,** the left lane line is initially the cross-over lane line **20a,** but changes to the distant left lane line **20c** when the cross-over lane line **20a** has been passed. The distance **C4** represents the lateral distance between the vehicle **1** and the immediate right lane line. As is shown in **FIG. 2,** the right lane line is initially the distant right lane line **20b,** but changes to the cross-over lane line **20a** when the cross-over lane line **20a** has been passed.

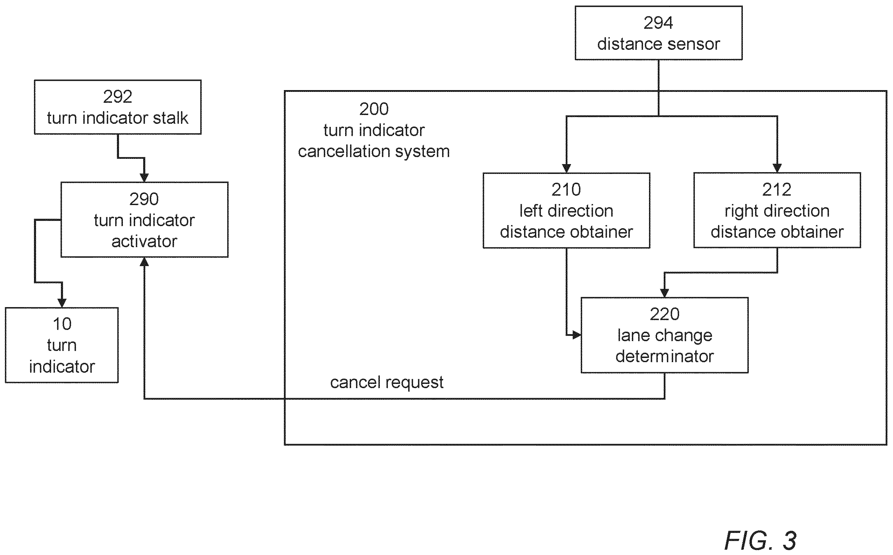

An example of a turn indicator cancellation system **200** is shown in **FIG. 3.** The turn indicator cancellation system **200** operates in conjunction with a turn indicator activator **290** which may or may not form part of the turn indicator cancellation system **200.** The turn indicator activator **290** is programmed to turn on one or more turn indicators **10** of the vehicle **1** in response to a start signal generated by a turn indicator stalk **292.**

The turn indicator cancellation system **200** is further programmed to operate in conjunction with a distance sensor **294.** The distance sensor **294** may or may not form part of the turn indicator cancellation system **200.** The distance sensor **294** is preferably in the form of one or more cameras arranged at the front center of the vehicle **1** and associated image analysis software and/or hardware configured to extract distance information from the captured images. Preferably, the one or more cameras **294** have a field view covering both left and right sides of the area in front of the vehicle **1** such that lane lines **20a-c** are within the field view of the one or more cameras **294.**

The turn indicator cancellation system **200** comprises a first distance obtainer **210** and a second distance obtainer **212.** The first and second distance obtainers **210, 212** receives data from the distance sensor **294.** The first and second distance obtainers **210, 212** may be incorporated as a single distance obtainer. Based on the received data, the first distance obtainer **210** is configured to obtain a distance from the vehicle **1** to a lane line **20a-c** arranged immediately to the left of the vehicle **1**. Based on the received data, the second distance obtainer **212** is configured to obtain a distance from the vehicle **1** to a lane line **20a-c** arranged immediately to the right of the vehicle **1**. With reference to **FIG. 2**, before the lane change the first distance obtainer **210** is configured to obtain the distance from the vehicle **1** to the cross-over lane line **20a**, while the second distance obtainer **212** is configured to obtain the distance from the vehicle **1** to the outer lane line **20b**. Once the cross-over lane line **20a** is crossed by the vehicle **1**, i.e. after the lane change the first distance obtainer **210** is configured to obtain the distance from the vehicle **1** to the inner lane line **20c**, while the second distance obtainer **212** is configured to obtain the distance from the vehicle **1** to the cross-over lane line **20a**.

The turn indicator cancellation system **200** further comprises a lane change determinator **220**. The lane change determinator **220** receives data from at least one of the first and second distance obtainers **210, 212**. Based on the received data, i.e. information of the distance between the vehicle **1** and the immediately adjacent lane line **20a-c**, the lane change determinator **220** is programmed to determine that a lane change is performed. Upon such determination, which will be further explained with reference to **FIGS. 4A-B**, the turn indicator cancellation system **200** is programmed to issue and transmit a cancellation request to the turn indicator activator **290** which immediately turns off the one or more turn indicators **10**.

**FIG. 4A** shows a diagram of the positions of a vehicle **1** during a lane change from a left lane to a right lane. With reference to **FIG. 2**, the situation shown in **FIG. 4A** would represent the vehicle **1** returning from the outer lane **7** to the inner lane **5**. The upper curve **C3** represents the distance between the vehicle **1** and the left lane line (i.e. the lane line immediately to the left of the vehicle **1**) as a positive value, and the bottom curve **C4** represents the distance between the vehicle **1** and the right lane line (i.e. the lane line immediately to the right of the vehicle **1**) as a negative value. It should be noted that the distance between the vehicle **1** and the lane lines could be any distance measured from the vehicle **1**, such as the distance measured from the outermost edge of the vehicle **1**, i.e. the left and right edges, respectively, or from a center position of the vehicle **1**.

Initially, at time **to**, the vehicle **1** is positioned centrally at the original left lane **7**. The absolute value of the **C3** curve is approximately the same as the absolute value of the **C4** curve. As the vehicle **1** starts to move to the right, approaching the inner lane **5**, the distance to the left lane line **20c** increases as represented by the **C3** curve. At the same time the distance to the right lane line **20a**, represented by the absolute value of the **C4** curve, decreases. At time **tl** the vehicle **1** is positioned at the cross-over lane line **20a**, meaning that the distance to the left lane line **20c** reaches its maximum value (the **C3** curve) while the distance to the right lane line, i.e. the cross-over line **20a**, is approximately zero.

At time **t2** the vehicle **1** has moved further to the right, meaning that the cross-over lane line **20a** is detectable as the left lane line immediately adjacent to the vehicle **1**. As a response to this shift of which lane line being the left lane line, the **C3** curve exhibits a rapid jump indicated by the dashed line. As soon as the cross-over lane line **20a** is crossed, the distance to the left lane line **20a** is approximately zero.

The **C4** curve exhibits a similar jump at time **t2**. When the cross-over lane line **20a** is crossed, it will no longer be detectable as the right lane line but instead the detectable right lane line will be the right-most lane line **20c** of the inner lane **5**. The distance to this distant lane line **20c** will, at time **t2**, be at a maximum as represented by the absolute value of the **C4** curve.

As the vehicle **1** continues its positioning to the right, towards the center of the right lane **5**, it will eventually be centrally positioned as indicated at time **t4**. Before this happens, at time **t3** it is determined that the lane change is finished. This is concluded by comparing the value of the **C3** curve, representing the cross-over distance **COD**, with a predetermined distance **PD**. When the cross-over distance **COD** is at least as great as the predetermined distance **PD**, which for example may be set to 1m, it is determined that the lane change is finished.

Optionally, the cross-over distance **COD** may be determined from the **C4** curve. The **C4** curve does not directly represent the cross-over distance **COD**, but rather a margin distance **MD** from the vehicle **1** to the distant lane line **20b**. However, the cross-over distance **COD** can be calculated from the margin distance **MD** by the equation:

$$COD = lane\ width - MD.$$

This means that by knowing the lane width the cross-over distance **COD** can be easily obtained from the measured margin distance **MD**. The lane width may be measured during driving by the distance sensor **294** and suitable image analysis software and/or hardware, or the lane width may be estimated as a standard lane width. The estimation of the lane width may be based on several parameters including map data, vehicle speed, etc.

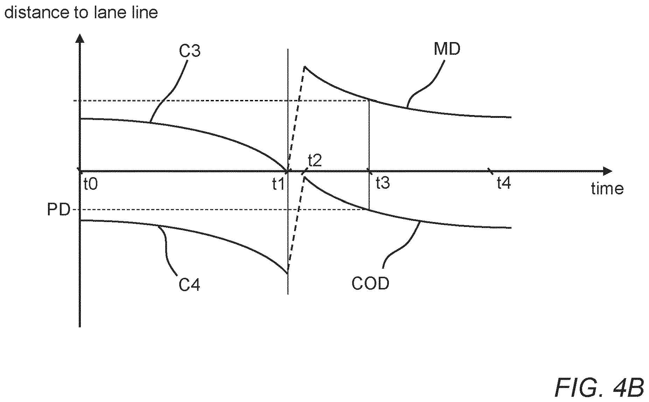

**FIG. 4B** shows the position of the vehicle **1** when performing a lane change, going from a right lane **5** to a left line **7**. This corresponds to the lane change illustrated in **FIG. 2**.

The upper curve **C3** represents the distance between the vehicle **1** and the left lane line (i.e. the cross-over lane line **20a** immediately to the left of the vehicle **1**) as a positive value, and the bottom curve **C4** represents the distance between the vehicle **1** and the right lane line (i.e. the distant lane line **20c** immediately to the right of the vehicle **1**) as a negative value.

Initially, at time **t0**, the vehicle **1** is positioned centrally at the original right lane **5.** The absolute value of the **C3** curve is approximately the same as the absolute value of the **C4** curve. As the vehicle **1** starts to move to the left, approaching the outer lane **7,** the distance to the cross-over line **20a** decreases as represented by the **C3** curve. At the same time the distance to the distant right lane line **20c,** represented by the absolute value of the **C4** curve, increases. At time **t1** the vehicle **1** is positioned at the cross-over lane line **20a,** meaning that the distance to the cross-over lane line **20a** reaches its minimum value (the **C3** curve) while the distance to the distant right lane line **20c** reaches its maximum value.

At time **t2** the vehicle **1** has moved further to the left, meaning that the distant left lane line **20b** of the target outer lane **7** is detectable as the left lane line immediately adjacent to the vehicle **1.** As a response to this shift of which lane line being the left lane line, the **C3** curve exhibits a rapid jump indicated by the dashed line. As soon as the cross-over lane line **20a** is crossed, the distance to the new left lane line **20b** is at a maximum.

The **C4** curve exhibits a similar jump at time **t2.** When the cross-over lane line **20a** is crossed, it will be detectable as the right lane line thus replacing the previously detectable distant lane line **20b** of the original inner lane **5.** The distance to the cross-over lane line **20a** will, at time **t2,** be approximately zero as represented by the absolute value of the **C4** curve.

As the vehicle **1** continues its positioning to the left, towards the center of the left lane **7,** it will eventually be centrally positioned as indicated at time **t4.** Before this happens, at time **t3** it is determined that the lane change is finished. This is concluded by comparing the absolute value of the **C4** curve, representing the cross-over distance **COD,** with a predetermined distance **PD.** When the cross-over distance **COD** is at least as great as the predetermined distance **PD,** which for example may be set to 1m, it is determined that the lane change is finished.

Optionally, the cross-over distance **COD** may be determined from the **C3** curve. The **C3** curve does not directly represent the cross-over distance **COD,** but rather a margin distance **MD** from the vehicle **1** to the distant lane line **20c.** In order to determine that the predetermined distance **PD** is reached, the cross-over distance **COD** can be calculated from the margin distance **MD.**

Hence, the distance to the lane lines are provided by the **C3** curve and the **C4** curve. For a lane change to the right, the **C3** curve will directly correspond to the cross-over distance **COD** while the **C4** curve indirectly corresponds to the cross-over distance **COD** by means of the margin distance **MD** and the lane width. For a lane change to the left, the **C4** curve will directly correspond to the cross-over distance **COD** while the **C3** curve indirectly corresponds to the cross-over distance **COD** by means of the margin distance **MD** and the lane width.

Based on the description of **FIGS. 4A-B,** the information provided by the **C3** curve and the **C4** curve allows for accurately determining that a lane change has occurred, whereby the turn indicator **10** can be cancelled without any input relating to the steering wheel angle of the vehicle **1.**

For example, direct determination of the cross-over distance **COD** may be preferred and indirect determination via the margin distance **MD** may only be performed if the cross-over distance **COD** cannot be directly determined. This may occur for example if the cross-over lane line **20a** is vague or partially missing, or if there is some data loss from the distance sensor **294.**

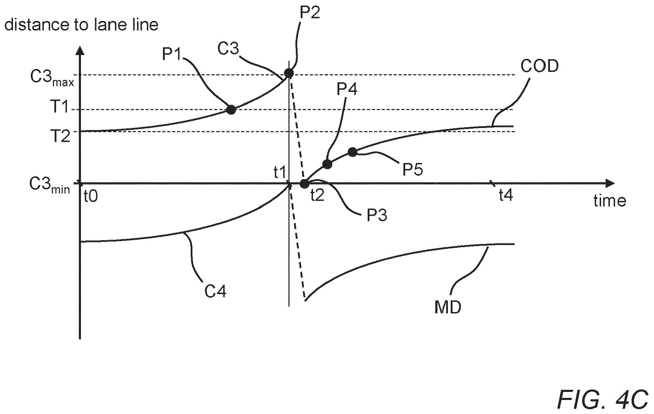

In **FIG. 4C** another example for determining a lane change is shown, which forms the basis for the turn indicator cancellation system **200.** The lane change is the same as shown in **FIG. 4A,** i.e. a lane change from a left lane to a right lane. Accordingly, the **C3** curve represents the cross-over distance **COD** once the cross-over lane line **20a** has been crossed, while the **C4** curve represents the margin distance **MD** to the distant left lane line **20C.** While this example will be described with reference to the **C3** curve, it should be evident that the same principle could be used for the **C4** curve.

As indicated in **FIG. 4C,** a lane change is determined by sampling the **C3** curve and by initially detecting that the **C3** value, i.e. the distance between the vehicle **1** and the distant left lane line, is at least as great as a predetermined threshold **T1.** The predetermined threshold **T1** may e.g. be set as a fixed value in the range of 2m to 3m, such as between 2,5m and 2,7m. This is indicated by sampling point **P1.** Subsequently, the **C3** curve exhibits a jump from a maximum value $C3_{max}$, obtained at sample point **P2,** to a minimum value $C3_{min}$, obtained at sample point **P3.** This detected jump indicates that the cross-over lane line **20a** has been passed by the vehicle **1.** The lane change is verified by at least one, but preferably two subsequent samples at sample points **P4** and at **P5.** The distance values obtained at these sampling points **P4, P5** are compared with a second threshold **T2.** The second threshold **T2** may be a fixed value in the range of 0,5m to 1,5m, such as 1m. If it is determined that the cross-over distance **COD,** i.e. the distance given by sample points **P4** and **P5** on the **C3** curve is below the second threshold **T2,** it is determined that the lane change has occurred satisfactory and that the turn indicator **10** can be turned off or cancelled.

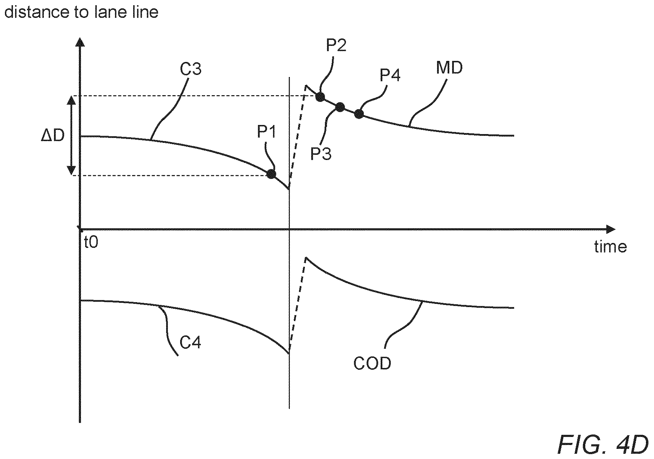

In **FIG. 4D** another example for determining that a lane change has occurred is shown. The lane change is the same as shown in **FIG. 4B,** i.e. a lane change from a right lane to a left lane. Accordingly, the **C4** curve represents the cross-over distance **COD** once the cross-over lane line **20a** has been crossed, while the **C3** curve represents the margin distance **MD** to the distant left lane line **20C.**

As indicated in **FIG. 4D** and sharing the same basic principle as described with reference to **FIG. 4C,** a lane change is determined by detecting a jump in any of the curves. While sampling points are shown on the **C3** curve, it should be readily understood that these samplings could equally well be made from the **C4** curve. By continuously calculating the distance difference ΔD between two adjacent samples, eventually the jump between lane lines will cause a rapid increase of the distance difference ΔD, as indicated in **FIG. 4D** between sample points **P1** and **P2**. The distance difference ΔD is compared with a predetermined change in distance, which for example may be set to a value between 1,5m and 2m. Once this difference in distance ΔD is confirmed to be at least as great as the predetermined change in distance, a lane change is assumed to occur.

The example shown in **FIG. 4D** is particularly advantageous in situations where the raw data curve is offset, i.e. sample points **P1** and **P2** will remain at the extreme sampling points but the entire **C3** curve is offset positively with regards to the y axis, while the entire **C4** is offset negatively on the y axis.

The lane change may be further verified by subsequent samples, indicated by sampling points **P3** and **P4.** The distance values of these sampling points **P3, P4,** representing the margin distance **MD,** are compared with a tolerance interval defined by the distance value of the previous sampling point **P2.** For example, the tolerance interval may be ±50%, more preferably ±40% of the determined difference in distance ΔD of the detected jump. Once the lane change has been confirmed by samples **P3** and **P4,** it is determined that the lane change has occurred satisfactory and that the turn indicator **10** can be turned off or cancelled.

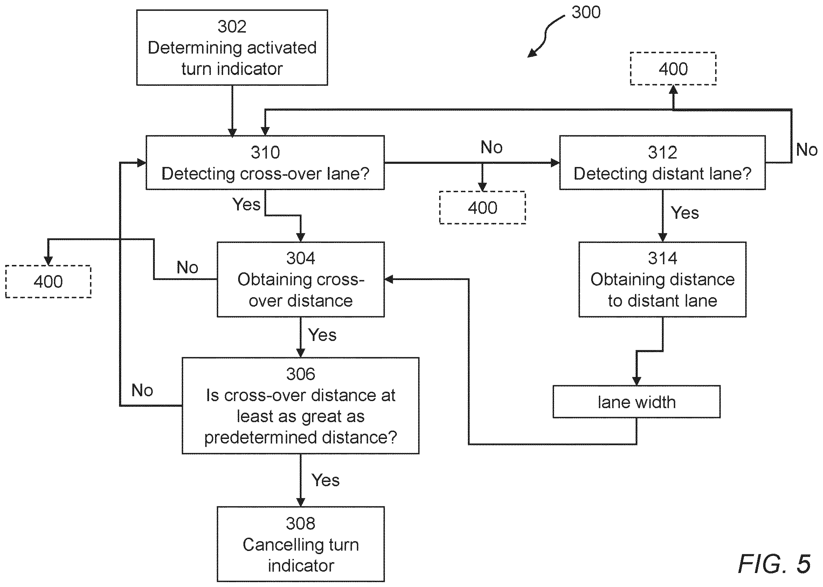

**FIG. 5** is a flow chart of a method **300** to automatically cancel a turn indicator **10** according to an example. The method **300** comprises determining **302,** by processing circuitry of a computer system, that a turn indicator **10** of a host vehicle **1** is activated. The method **300** further comprises obtaining **304,** by the processing circuitry, a cross-over distance **COD** between the host vehicle **1** and a cross-over lane line **20a** during a lane change from an original lane **5, 7** over the cross-over lane line to a target lane **5, 7.** The method **300** further comprises determining **306,** by the processing circuitry, that the cross-over distance **COD** is at least as great as a predetermined distance **PD,** and cancelling **308,** by the processing circuitry, the turn indicator **10.**

Determining **304** the cross-over distance **COD** may be performed as shown in **FIG. 5.** Initially, it is checked **310** if the cross-over lane **20a** is detectable. If yes, the distance to the cross-over lane **20a** is directly determined **304.** If not, the method **300** is checking **312** if the distant lane line is detectable. If not, the method **300** may return to checking **310** if the cross-over lane is detectable. If yes, the method **300** obtains **314** the distance **MD** between the vehicle **1** and the distant lane line. The distance **MD** is used, together with the lane width, to obtain the cross-over distance **COD.**

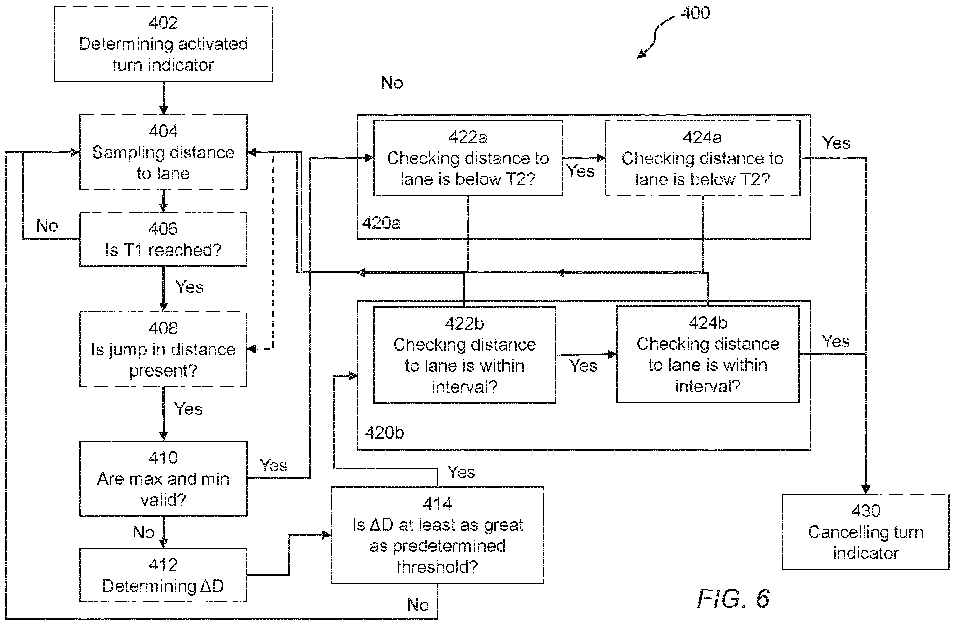

Another example of a method **400** to automatically cancel a turn indicator **10** is shown in **FIG. 6.** The method **400** could be performed individually and separate without any combination with the method **300** described with reference to **FIG. 5.** Optionally, the method **400** is performed in combination with the method **300** of **FIG. 5** such that the method **400** of **FIG. 6** is performed as a response to the method **300** not being able to obtain the cross-over distance **COD** properly. This is indicated by the dashed boxes representing optional routes in **FIG. 5.**

Initially, the method **400** determines **402** that the turn indicator **10** is activated. If performed in combination with the method **300,** this step **402** may be omitted. Subsequently, the method obtains **404** the distance to the left and/or right lane line, i.e. the current value of any (or both) of the **C3** or **C4** curves. The method **400** repeats sampling **404** of the distance to the lane line, and eventually determines **406** that the value of the **C3** curve and/or **C4** curve is at least as great as a first threshold **T1.** If yes, the method **400** proceeds sampling of the distance to the lane line until it is determined **408** that any of the **C3** curve or the **C4** curve exhibits a jump, corresponding to crossing of the cross-over lane **20a.** If no, the method **400** may in any case proceed sampling of the distance to the lane line according to the dashed line until it is determined **408** that any of the **C3** curve or the **C4** curve exhibits a jump, corresponding to crossing of the cross-over lane **20a.**

The method **400** checks **410** if the obtained maximum and minimum values of the jump are valid, i.e. if they are reasonable with regards to the lane width or if there is an offset present. If they are, the method **400** assumes a performed lane change, and proceeds with a verification procedure **420a.** If the obtained maximum and minimum values of the jump are not valid, the method **400** determines **412** the difference in distance ΔD across the jump. In **414** the method **400** determines that the difference in distance ΔD is at least as great as a predetermined difference in distance. Such determination **414** is followed by a verification procedure **420b.**

Referring to the verification procedure **420a,** which is performed when the jump has been confirmed by valid maximum and minimum values, the method **400** performs a first sampling **422a** of the relevant distance between the vehicle 1 and the lane line, i.e. the cross-over distance **COD** or the margin distance **MD.** If the distance does not exceed a second threshold **T2,** a second sampling **424a** is made before the turn indicator **10** is cancelled **430.** On the other hand, if any of the samplings **422a, 424a** does exceed the second threshold **T2,** the lane change is not confirmed and the method **400** will return to its start position **402.**

Referring to the verification procedure **420b,** which is performed when the jump has been confirmed by a sufficient distance difference ΔD, the method **400** performs a first sampling **422b** of the relevant distance between the vehicle **1** and the lane line, i.e. the cross-over distance **COD** or the margin distance **MD.** If the distance lies within a tolerance interval defined by the distance difference ΔD, a second sampling **424b** and associated comparison with the tolerance interval is performed before the turn indicator **10** is cancelled **430.** On the other hand, if any of the samplings **422b, 424b** does not fall within the tolerance interval, the lane change is not confirmed and the method **400** will return to its start position **402.**

FIG. 7 is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506**. The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504**. The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include nonvolatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500**.

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hardcoded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: determine that a turn indicator **(10)** of a host vehicle **(1)** is activated; obtain a cross-over distance **(COD)** between the host vehicle **(1)** and a cross-over lane line **(20a)** during a lane change from an original lane **(5, 7)** over the cross-over lane line to a target lane **(5, 7)**; determine that the cross-over distance **(COD)** is at least as great as a predetermined distance **(PD)**; and cancel the turn indicator **(10)**.

Example 2: The computer system of Example 1, wherein the cross-over distance **(COD)** between the host vehicle **(1)** and the cross-over lane line **(20a)** is a lateral distance extending in a direction being perpendicular to the longitudinal direction of the cross-over lane line **(20a)**.

Example 3: The computer system of Example 1 or 2, wherein the cross-over distance **(COD)** between the host vehicle **(1)** and the cross-over lane line **(20a)** is a distance between a center of the host vehicle **(1)** and the cross-over lane line **(20a)**.

Example 4: The computer system of any of the preceding Examples, wherein the processing circuitry is configured to: obtain the cross-over distance **(COD)** between the host vehicle **(1)** and the cross-over lane line **(20a)** by measuring the cross-over distance **(COD)** between the host vehicle **(1)** and the cross-over lane line **(20a)**.

Example 5: The computer system of any of Examples 1 to 3, wherein the processing circuitry is configured to: obtain the cross-over distance **(COD)** between the host vehicle **(1)** and the cross-over lane line **(20a)** by measuring a margin distance **(MD)** between the host vehicle **(1)** and a distant lane line **(20b, 20c)** of the target lane **(5, 7)**.

Example 6: The computer system of Example 5, wherein the processing circuitry is further configured to: measure the margin distance **(MD)** between the host vehicle (1) and a distant lane line **(20b, 20c)** of the target lane **(5, 7)** as a response to a failed attempt to measure the cross-over distance **(COD)** between the host vehicle **(1)** and the cross-over lane line **(20a)**.

Example 7: The computer system according to Example 5 or 6, wherein the cross-over distance **(COD)** is obtained by subtracting the measured margin distance **(MD)** from a target lane width.

Example 8: The computer system of any of the preceding Examples, wherein the predetermined distance **(PD)** is a fixed value.

Example 9: The computer system of any of the preceding Examples, wherein the predetermined distance **(PD)** is based on a width of at least one of the original lane **(5, 7)** and the target lane **(5, 7)**.

Example 10: The computer system of any of the preceding Examples, wherein the processing circuitry is further configured to: obtain a change in distance **(ΔD)** between the host vehicle **(1)** and a lane line **(20a-c)** during a lane change from an original lane **(5, 7)** over the cross-over lane line **(20a)** to a target lane **(5, 7)**; determine that the change in distance **(ΔD)** is at least as great as a predetermined change in distance; and cancel the turn indicator **(10)** based on the change in distance **(ΔD)** being at least as great as the predetermined change in distance.

Example 11: The computer system of Example 10, wherein the change in distance **(ΔD)** represents a change of lane line **(20a-c)** from a left lane line **(20a, 20c)** of the original lane **(5, 7)** to a left lane line of the target lane **(20a, 20c),** or from a right lane line **(20a, 20b)** of the original lane **(5, 7)** to a right lane line of the target lane

(20a, 20b).

Example 12: The computer system of Example 11, wherein the processing circuitry is further configured to: determine that a distance (COD, MD) between the host vehicle (1) and the left or right lane line (20a-c) is within a tolerance interval based on the obtained change in distance (ΔD).

Example 13: The computer system of Example 1, wherein the cross-over distance (COD) between the host vehicle (1) and the cross-over lane line (20a) is a lateral distance extending in a direction being perpendicular to the longitudinal direction of the cross-over lane line (20a), and wherein the cross-over distance (COD) between the host vehicle (1) and the cross-over lane line (20a) is a distance between a center of the host vehicle (1) and the cross-over lane line (20a), wherein the processing circuitry is further configured to: obtain the cross-over distance (COD) between the host vehicle (1) and the cross-over lane line (20a) by measuring the cross-over distance (COD) between the host vehicle (1) and the cross-over lane line (20a) and/or obtain the cross-over distance (COD) between the host vehicle (1) and the cross-over lane line (20a) by measuring a margin distance (MD) between the host vehicle (1) and a distant lane line (20b, 20c) of the target lane (5, 7), measure the margin distance (MD) between the host vehicle (1) and a distant lane line (20b, 20c) of the target lane (5, 7) as a response to a failed attempt to measure the cross-over distance (COD) between the host vehicle (1) and the cross-over lane line (20a), wherein the cross-over distance (COD) is obtained by subtracting the measured margin distance (MD) from a target lane width, wherein the predetermined distance (PD) is a fixed value or wherein the predetermined value (PD) is based on a width of at least one of the original lane (5, 7) and the target lane (5, 7), wherein the processing circuitry is further configured to: obtain a change in distance (ΔD) between the host vehicle (1) and a lane line (20a-c) during a lane change from an original lane (5, 7) over the cross-over lane line (20a) to a target lane (5, 7); and determine that the change in distance (ΔD) is at least as great as a predetermined change in distance, and cancel the turn indicator (10) based on the change in distance (ΔD) being at least as great as the predetermined change in distance, wherein the change in distance (ΔD) represents a change of lane line (20a-c) from a left lane line (20a, 20c) of the original lane (5, 7) to a left lane line (20a, 20c) of the target lane (5, 7), or from a right lane line (20a, 20b) of the original lane (5, 7) to a right lane line (20a, 20b) of the target lane (5, 7), wherein the processing circuitry is further configured to: determine that a distance (COD, MD) between the vehicle (1) and the left or right lane line (20a-c) is within a tolerance interval based on the obtained change in distance (ΔD), and wherein the processing circuitry is further configured to: re-determine, for a subsequent position of the host vehicle (1) during the lane change, that the distance (COD, MD) between the vehicle (1) and the left or right lane line (20a-c) is within the tolerance interval.

Example 14: A vehicle (1) comprising the computer system of any of Examples 1-13.

Example 15: A computer-implemented method, comprising: determining, by processing circuitry of a computer system, that a turn indicator of a host vehicle is activated; obtaining, by the processing circuitry, a cross-over distance between the host vehicle and a cross-over lane line during a lane change from an original lane over the cross-over lane line to a target lane; determining, by the processing circuitry, that the cross-over distance is at least as great as a predetermined distance, and cancelling, by the processing circuitry, the turn indicator.

Example 16: The method of Example 15, further comprising: obtaining, by the processing circuitry, the cross-over distance between the host vehicle and the cross-over lane line by measuring the cross-over distance between the host vehicle and the cross-over lane line, or by measuring a margin distance between the host vehicle and a distant lane line of the target lane.

Example 17: The method of Example 15 or 16, further comprising measuring the margin distance between the host vehicle and a distant lane line of the target lane as a response to a failed attempt to measure the cross-over distance between the host vehicle and the cross-over lane line.

Example 18: The method of Example 16, wherein the cross-over distance is obtained by subtracting the measured margin distance from a target lane width.

Example 19: A computer program product comprising program code for performing, when executed by the processing circuitry, the method of any of Examples 15 to 18.

Example 20: A non-transitory computer-readable storage medium comprising instructions, which when executed by the processing circuitry, cause the processing circuitry to perform the method of any of Examples 15 to 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1.  A computer system comprising processing circuitry configured to:

    determine that a turn indicator **(10)** of a host vehicle **(1)** is activated;
    obtain a cross-over distance **(COD)** between the host vehicle **(1)** and a cross-over lane line **(20a)** during a lane change from an original lane **(5, 7)** over the cross-over lane line to a target lane **(5, 7)**;
    determine that the cross-over distance **(COD)** is at least as great as a predetermined distance **(PD)**; and
    cancel the turn indicator **(10)**.

2.  The computer system of claim 1, wherein the cross-over distance **(COD)** between the host vehicle **(1)**

and the cross-over lane line **(20a)** is a lateral distance extending in a direction being perpendicular to the longitudinal direction of the cross-over lane line **(20a)**.

3.  The computer system of claim 1 or 2, wherein the cross-over distance **(COD)** between the host vehicle **(1)** and the cross-over lane line **(20a)** is a distance between a center of the host vehicle **(1)** and the cross-over lane line **(20a)**.

4.  The computer system of any of the preceding claims, wherein the processing circuitry is configured to:
    obtain the cross-over distance **(COD)** between the host vehicle **(1)** and the cross-over lane line **(20a)** by measuring the cross-over distance **(COD)** between the host vehicle **(1)** and the cross-over lane line **(20a)**.

5.  The computer system of any of claims 1 to 3, wherein the processing circuitry is configured to:
    obtain the cross-over distance **(COD)** between the host vehicle **(1)** and the cross-over lane line **(20a)** by measuring a margin distance **(MD)** between the host vehicle **(1)** and a distant lane line **(20b, 20c)** of the target lane **(5, 7)**.

6.  The computer system of claim 5, wherein the processing circuitry is further configured to:
    measure the margin distance **(MD)** between the host vehicle **(1)** and a distant lane line **(20b, 20c)** of the target lane **(5, 7)** as a response to a failed attempt to measure the cross-over distance **(COD)** between the host vehicle **(1)** and the cross-over lane line **(20a)**.

7.  The computer system according to claim 5 or 6, wherein the cross-over distance **(COD)** is obtained by subtracting the measured margin distance **(MD)** from a target lane width.

8.  The computer system of any of the preceding claims, wherein the processing circuitry is further configured to:

    obtain a change in distance **(ΔD)** between the host vehicle **(1)** and a lane line **(20a-c)** during a lane change from an original lane **(5, 7)** over the cross-over lane line **(20a)** to a target lane **(5, 7)**;
    determine that the change in distance **(ΔD)** is at least as great as a predetermined change in distance; and
    cancel the turn indicator **(10)** based on the change in distance **(ΔD)** being at least as great as the predetermined change in distance.

9.  The computer system of claim 1, wherein

the cross-over distance **(COD)** between the host vehicle **(1)** and the cross-over lane line **(20a)** is a lateral distance extending in a direction being perpendicular to the longitudinal direction of the cross-over lane line **(20a),** and wherein the cross-over distance **(COD)** between the host vehicle **(1)** and the cross-over lane line **(20a)** is a distance between a center of the host vehicle **(1)** and the cross-over lane line **(20a),** wherein the processing circuitry is further configured to:

obtain the cross-over distance **(COD)** between the host vehicle **(1)** and the cross-over lane line **(20a)** by measuring the cross-over distance **(COD)** between the host vehicle **(1)** and the cross-over lane line **(20a)** and/or obtain the cross-over distance **(COD)** between the host vehicle **(1)** and the cross-over lane line **(20a)** by measuring a margin distance **(MD)** between the host vehicle **(1)** and a distant lane line **(20b, 20c)** of the target lane **(5, 7),**
measure the margin distance **(MD)** between the host vehicle **(1)** and a distant lane line **(20b, 20c)** of the target lane **(5, 7)** as a response to a failed attempt to measure the cross-over distance **(COD)** between the host vehicle **(1)** and the cross-over lane line **(20a),** wherein the cross-over distance **(COD)** is obtained by subtracting the measured margin distance **(MD)** from a target lane width,
wherein the predetermined distance **(PD)** is a fixed value or wherein the predetermined value **(PD)** is based on a width of at least one of the original lane **(5, 7)** and the target lane **(5, 7),**
wherein the processing circuitry is further configured to:

obtain a change in distance **(ΔD)** between the host vehicle **(1)** and a lane line **(20a-c)** during a lane change from an original lane **(5, 7)** over the cross-over lane line **(20a)** to a target lane **(5, 7);** and
determine that the change in distance **(ΔD)** is at least as great as a predetermined change in distance, and
cancel the turn indicator **(10)** based on the change in distance **(ΔD)** being at least as great as the predetermined change in distance, wherein the change in distance **(ΔD)** represents a change of lane line **(20a-c)** from a left lane line **(20a, 20c)** of the original lane **(5, 7)** to a left lane line **(20a, 20c)** of the target lane **(5, 7),** or from a right lane line **(20a, 20b)** of the original lane **(5, 7)** to a right lane line **(20a, 20b)** of the target lane **(5, 7),** wherein the processing circuitry is further configured to:

determine that a distance **(COD, MD)** between the vehicle **(1)** and the left or right lane line **(20a-c)** is within a tolerance interval based on the obtained change in distance **(ΔD),** and wherein the processing circuitry is further configured to:
re-determine, for a subsequent position of the host vehicle **(1)** during the lane change, that the distance **(COD, MD)** between the vehicle **(1)** and the left or right lane line **(20a-c)** is within the tolerance interval.

10. A vehicle **(1)** comprising the computer system of any of claims 1-9.

11. A computer-implemented method, comprising:

determining, by processing circuitry of a computer system, that a turn indicator of a host vehicle is activated;
obtaining, by the processing circuitry, a cross-over distance between the host vehicle and a cross-over lane line during a lane change from an original lane over the cross-over lane line to a target lane;
determining, by the processing circuitry, that the cross-over distance is at least as great as a predetermined distance, and
cancelling, by the processing circuitry, the turn indicator.

12. The method of claim 11, further comprising:
obtaining, by the processing circuitry, the cross-over distance between the host vehicle and the cross-over lane line by measuring the cross-over distance between the host vehicle and the cross-over lane line, or by measuring a margin distance between the host vehicle and a distant lane line of the target lane.

13. The method of claim 11 or 12, further comprising measuring the margin distance between the host vehicle and a distant lane line of the target lane as a response to a failed attempt to measure the cross-over distance between the host vehicle and the cross-over lane line.

14. A computer program product comprising program code for performing, when executed by the processing circuitry, the method of any of claims 11 to 13.

15. A non-transitory computer-readable storage medium comprising instructions, which when executed by the processing circuitry, cause the processing circuitry to perform the method of any of claims 11 to 13.

EP 4 556 314 A1

FIG. 1

FIG. 2

EP 4 556 314 A1

```
                                          ┌─────────────────┐
                                          │       294       │
                                          │ distance sensor │
                                          └─────────────────┘
                                                   │
┌──────────────────┐   ┌──────────────────────────┼─────────────────────────────┐
│       292        │   │  200                      │                             │
│ turn indicator   │   │  turn indicator           │                             │
│     stalk        │   │  cancellation system      ▼                  ▼          │
└──────────────────┘   │                   ┌────────────────┐ ┌────────────────┐ │
         │             │                   │      210       │ │      212       │ │
         ▼             │                   │ left direction │ │ right direction│ │
┌──────────────────┐   │                   │distance obtainer│ │distance obtainer│ │
│       290        │   │                   └────────────────┘ └────────────────┘ │
│ turn indicator   │   │                          │                  │           │
│    activator     │   │                          │          ┌───────┘           │
└──────────────────┘   │                          ▼          ▼                   │
    │         ▲        │                   ┌────────────────────┐                │
    │         │        │                   │        220         │                │
    ▼         │        │                   │   lane change      │                │
┌──────────┐  │        │                   │   determinator     │                │
│    10    │  │        │  cancel request   └────────────────────┘                │
│  turn    │  └────────┼───────────────────────────┘                            │
│ indicator│           │                                                         │
└──────────┘           └─────────────────────────────────────────────────────────┘
```

FIG. 3

*FIG. 4A*

FIG. 4B

*FIG. 4C*

*FIG. 4D*

EP 4 556 314 A1

300

**302**
Determining activated turn indicator

**400**

**310**
Detecting cross-over lane?

No →

**312**
Detecting distant lane?

No

Yes ↓

**400**

**400**

**304**
Obtaining cross-over distance

No

**314**
Obtaining distance to distant lane

Yes ↓

Yes ↓

**306**
Is cross-over distance at least as great as predetermined distance?

No

lane width

Yes ↓

**308**
Cancelling turn indicator

*FIG. 5*

EP 4 556 314 A1

```
┌─────────────────────┐
│        402          │                                      ╱ 400
│ Determining activated│                                    ╱
│   turn indicator    │
└─────────────────────┘
          │
          ▼                                    No
┌─────────────────────┐      ┌──────────────────────────┐  ┌──────────────────────────┐
│        404          │      │          422a            │  │          424a            │   Yes
│  Sampling distance  │◄───  │   Checking distance to   │  │   Checking distance to   │────
│      to lane        │      │   lane is below T2?      │  │   lane is below T2?      │
└─────────────────────┘      └──────────────────────────┘  └──────────────────────────┘
   No     │                      420a          Yes
          ▼
┌─────────────────────┐
│        406          │
│   Is T1 reached?    │
└─────────────────────┘
          │
         Yes
          ▼
┌─────────────────────┐      ┌──────────────────────────┐  ┌──────────────────────────┐
│        408          │      │          422b            │  │          424b            │   Yes
│ Is jump in distance │      │    Checking distance     │  │    Checking distance     │────
│     present?        │      │   to lane is within      │  │   to lane is within      │
└─────────────────────┘      │      interval?           │  │      interval?           │
          │                  └──────────────────────────┘  └──────────────────────────┘
         Yes                    420b          Yes
          ▼
┌─────────────────────┐                Yes
│        410          │   Yes
│  Are max and min    │────
│      valid?         │
└─────────────────────┘      ┌──────────────────────────┐
          │                  │          414             │
         No                  │   Is ΔD at least as great │           ┌──────────────────┐
          ▼                  │   as predetermined       │           │       430        │
┌─────────────────────┐      │      threshold?          │           │ Cancelling turn  │
│        412          │─────▶│                          │           │    indicator     │
│  Determining ΔD     │      └──────────────────────────┘           └──────────────────┘
└─────────────────────┘                No
```

*FIG. 6*

FIG. 7

**Europäisches Patentamt**
**European Patent Office**
**Office européen des brevets**

# EUROPEAN SEARCH REPORT

**Application Number**

EP 23 21 0168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 4 875002 B2 (TOKAI RIKA CO LTD) 15 February 2012 (2012-02-15) | 1-3,5,8, 10-12, 14,15 | INV. B60Q1/40 |
| A | * the whole document * | 9 | |
| X | JP 2004 314804 A (CALSONIC KANSEI CORP) 11 November 2004 (2004-11-11) | 1-4, 10-12, 14,15 | |
| A | * the whole document * | 9 | |
| X | US 2013/265152 A1 (AU ANITA [US] ET AL) 10 October 2013 (2013-10-10) | 1,2,4-7, 10-15 | |
| A | * the whole document * | 8 | |

**TECHNICAL FIELDS SEARCHED (IPC)**

B60Q

The present search report has been drawn up for all claims

| Place of search | Date of completion of the search | Examiner |
|---|---|---|
| Munich | 4 March 2024 | Aubard, Sandrine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 23 21 0168

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2024

| Patent document cited in search report | | Publication date | Patent family member(s) | | Publication date |
|---|---|---|---|---|---|
| JP 4875002 | B2 | 15-02-2012 | JP | 4875002 B2 | 15-02-2012 |
| | | | JP | 2009166734 A | 30-07-2009 |
| JP 2004314804 | A | 11-11-2004 | NONE | | |
| US 2013265152 | A1 | 10-10-2013 | US | 2005200467 A1 | 15-09-2005 |
| | | | US | 2009189756 A1 | 30-07-2009 |
| | | | US | 2011279257 A1 | 17-11-2011 |
| | | | US | 2013265152 A1 | 10-10-2013 |
| | | | US | 2016144776 A1 | 26-05-2016 |
| | | | US | 2017057405 A1 | 02-03-2017 |
| | | | US | 2018345850 A1 | 06-12-2018 |
| | | | US | 2019270404 A1 | 05-09-2019 |
| | | | US | 2020172004 A1 | 04-06-2020 |

EPO FORM P0459

For more details about this annex : see Official Journal of the European Patent Office, No. 12/82